# EUROPEAN PATENT APPLICATION

(11) **EP 1 770 844 A2**
(43) Date of publication of application: **04.04.2007**
(21) Application number: 06020323.9
(22) Date of filing: 27.09.2006
(51) Int. Cl.: H02J 3/40

(54) **Power conditioner**

(30) Priority: 29.09.2005 JP 2005283329
(71) Applicant: SANYO ELECTRIC CO., LTD., Moriguchi-shi, Osaka 570-8677 (JP)
(72) Inventor: Tobi, Yukio, Ota-shi, Gunma 373-0006 (JP); Madenokoji, Masaki, Honjo-shi, Saitama 367-0045 (JP)
(74) Representative: Glawe, Delfs, Moll

(57) **Abstract**

A power conditioner (6) for boosting DC power generated by a photovoltaic power generating system by a step-up chopper (7), converting the boosted DC power to AC power by an inverter (8) and connecting the AC power to an AC power supply system (11), characterized by including a communication unit having a communication function that constitutes a small-scale network and is equipped with at least DC power achieved by conducting voltage adjustment to DC power generated by a photovoltaic power generating system (1), the communication unit being equipped with an address managing portion (22), a memory portion (23), a time counting portion (24)and an operating portion (27) to have a server function on the network.

## Description

### BACKGROUND OF THE INVENTION

### 1. Field of the Invention

The present invention relates to a power conditioner for boosting DC power generated by a photovoltaic power generating system through a step-up (boosting) chopper, converting the boosted DC power to AC power by an inverter and then connecting the converted AC power to an AC power supply system.

### 2. Description of the Related Art

It has been considered that a server is provided in a housing, an office or the like in order to instruct actuation or make reservations of home electric appliances such as an air conditioner, a television set, etc. and also construct a network for communicating information or data with terminals such as personal computers, etc. which are connected to the Internet.

Such a server is connected to a power wire indoors, and supplied with power of an AC power supply system (commercial power line) from a power plant or the like through the power wire. Accordingly, the server is necessarily stopped when the power supply system is under blackout (failure of power supply).

As described above, there has been hitherto such a problem that the server is stopped when the power supply system is under blackout. Even when countermeasure equipment for blackout such as UPS (uninterruptible power supply system) or the like is set up to solve the above problem, it can work for only short-time blackout, and thus it cannot be sufficiently practically used.

### SUMMARY OF THE INVENTION

The present invention has been implemented in view of the foregoing problem, and has an object to provide a power conditioner that suppress stop of a server at maximum even when an AC power supply system is under blackout.

In order to attain the above object, there is provided a power conditioner (6) for boosting DC power generated by a photovoltaic power generating system by a step-up chopper (7), converting the boosted DC power to AC power by an inverter(8) and connecting the AC power to an AC power supply system (11), characterized by including a communication unit having a communication function that constitutes a small-scale network and is equipped with at least DC power achieved by conducting voltage adjustment to DC power generated by a photovoltaic power generating system (1), the communication unit being equipped with an address managing portion (22), a memory portion (23), a time counting portion (24)and an operating portion (27) to have a server function on the network.

In the above power conditioner, the DC power before the boosting of the step-up chopper may be subjected to voltage adjustment by a voltage adjusting converter (31), and used as a power source for the communicating unit.

In the above power conditioner, the time counting portion (24) may be equipped with an auxiliary power source (26) using charged power.

In the above power conditioner, the auxiliary power source may comprise a capacitor (26).

In the above power conditioner, the capacitance of the auxiliarypower source maybe set so that the time counting portion can operate for at least one day.

In the above power conditioner, the server function may contain a storage portion for storing a generated power value achieved by detecting the electric power generated by the photovoltaic power generating system and a sold power value achieved by detecting the electric power sold to the AC power supply system.

In the above power conditioner, the server function may be connectable to the Internet (49).

In the above power conditioner, the server function can communicate with a load (12) connected to the AC power supply system through the communication function.

In the above power conditioner, the server function and the communication function may be constructed on a single board or in a single package.

In the above power conditioner, the communication function may have at least one of a wired communication function and a wireless communication function.

In the above power conditioner, the communication unit may comprise a LAN board.

According to the power conditioner of the present invention, the communication unit constituting the small-scale network can be installed in the power conditioner, and the DC power achieved by conducting the voltage adjustment to the DC power generated by the photovoltaic power generating system is supplied to the communication unit to keep actuation of some functions of the communication unit. Therefore, the communication unit can operated with the power generated by the photovoltaic power generating system irrespective of blackout or non-blackout of the AC power supply system in the daytime.

Furthermore, when the DC power before it is boosted by the step-up chopper is subjected to voltage adjustment by the voltage adjusting converter and then used as the power source for the communication unit, the power generated by the photovoltaic power generating system can be supplied to the communication unit even if the power concerned is too small to be boosted and supplied to the AC power supply system.

Still furthermore, when the time counting portion is equipped with the auxiliary power source using charged power, the time counting function can be kept even if the system falls into a blackout state in the night. By setting the capacity of the auxiliary power source to a value with which the time counting portion can operate for at least one day, when half a day elapses from the blackout of the system, it will be under daylight, and thus power generated by the photovoltaic power generating system is supplied to the communication unit. As a result, even when the blackout of the system is continued for a long term (for example, one day or more), the function of the time counting portion can be continued without being interrupted, and thus the communication function can be restored.

As described above, in order to suppress the stop of the server at maximum even when the system is under blackout, the communication unit constituting the small-scale network can be installed in the power conditioner, and the DC power achieved by conducting the voltage adjustment to the DC power generated by the photovoltaic power generating system is supplied to the communication unit to keep actuation of some functions of the communication unit.

### BRIEF DESCRIPTION OF THE DRAWINGS

Fig. 1 is a diagram showing a power system interconnection system using a power conditioner according to the present invention; and
Fig. 2 is a diagram showing a LAN board.

### DETAILED DESCRIPTION OF PREFERRED EMBODIMENT

A preferred embodiment of the present invention will be described hereunder with reference to the accompanying drawings.

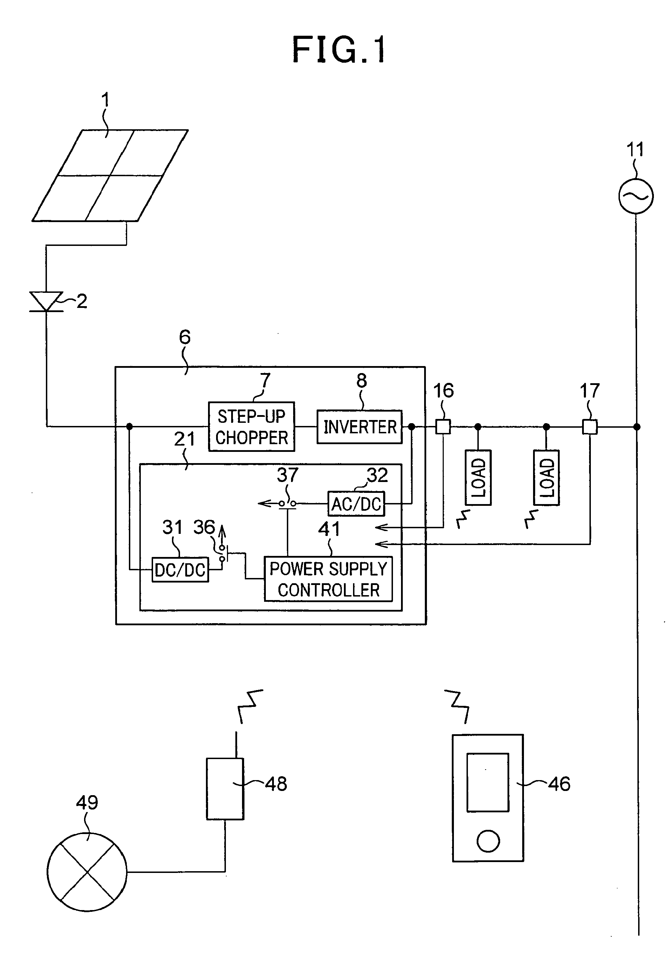

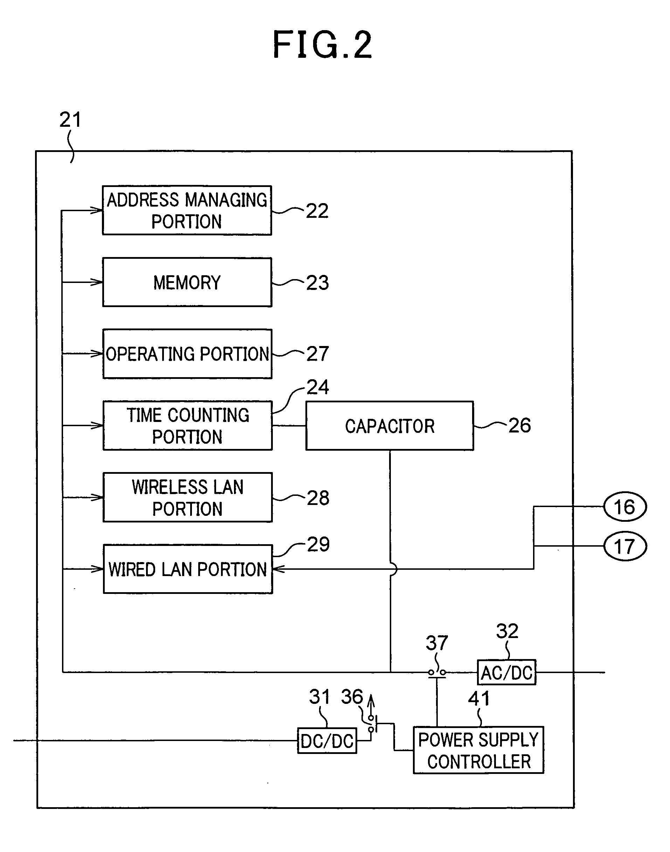

An embodiment of a power conditioner according to the present invention will be described with reference to Figs. 1 and 2.

Fig. 1 is a diagram showing a system (power system) interconnecting system using a power conditioner according to the present invention, and Fig. 2 is a diagram showing a LAN board.

In Fig. 1, a house or an office is equipped with a solar battery panel 1 of a photovoltaic power generating system serving as a DC power generating unit, and the solar battery panel 1 is connected to a power conditioner 6 through a backflow preventing diode 2 or the like. According to the power conditioner 6 of this embodiment, the voltage of DC power input from the solar battery panel 1 is boosted by a step-up (boosting) chopper 7, and the boosted voltage is converted to AC power having pseudo sine wave by an inverter 8 so that the AC power thus converted has the same frequency as a predetermined frequency (the frequency of a system 11 (commercial power line) 11 and has a voltage higher than the voltage of the system 11. The AC power thus achieved is output to the system 11.

The system 11 is connected to loads 12 such as an air conditioner, a freezer, a television set, etc. which consume electricity. When power generated by the photovoltaic power generating system is larger than the consumed power of the loads 12, some or all of the generated power from the photovoltaic power generating system is supplied (that is, sold) to the system 11. On the other hand, when the power generated by the photovoltaic power generating system is smaller than the consumed power of the loads 12, the power is supplied (that is, purchased) from the system 11.

Furthermore, there are also provided a generated-power meter 16 for detecting the amount of electric power generated by the photovoltaic power generating system and a sold/purchased power meter 17 for detecting the amount of electric power sold to or purchased from the system 11 (when an electric type is used as the sold power meter, the output thereof is used as the amount of sold electric power, and when an analog type is used as the soldpowermeter, the amount of sold electric power (electric energy) is calculated on the basis of both the values of an ammeter and a voltmeter).

The power conditioner 6 is designed so that a LAN board 21 can be installed therein. In this embodiment, the LAN board is defined as a unit in which a communication function constituting a small-scale network and a sever function having an address managing portion, a memory, a time counting portion and an operating portion on the network are constructed on a single substrate or in a single package, and the LAN board is supplied with DC power achieved by conducting voltage adjustment on DC power generated by the photovoltaic power generating system. As described above, the LAN board 21 is equipped with the address managing portion 22, the memory 23, the time counting portion 24, a capacitor 26, the operating portion 27, a wireless LAN portion 28 and a wired LAN portion 29, whereby it has both the communication function and the server function.

The address managing portion 22 manages a self address allocated to the LAN board 21 itself, and addresses allocated to other elements such as the loads 12, a monitor 46 for the power conditioner, connecting equipment 48, etc. As the memory 23 are provided not only a volatile memory, but also a rewritable non-volatile memory for storing programs, set data of the loads 12, etc. The capacitor 26 serves as a backup power source (auxiliary power source) for the time counting portion 24, and it has a capacity enough to enable at least one-day actuation of the time counting portion 24.

Power from the solar battery panel 1 is supplied through the backflow preventing diode 2 to the LAN board 21, subjected to voltage adjustment in a step-up/step-down converter (DC-DC converter) 31 as a voltage adjusting converter, and then supplied to the respective portions 22 to 29 of the LAN board 21. Furthermore, the AC power from the system 11 is converted to DC power in an AC/DC converter 32, and then supplied to the respective portions 22 to 29 of the LAN board 21. The output of the step-up/step-down converter 31 and the output of the AC/DC converter 32 are set to ON or OFF by opening/closing switches 36 and 37, respectively. The opening/closing switches 36 and 37 are controlled by a power supply controller 41 of the LAN board so that both the opening/closing switches 36 and 37 are prevented from being set to ON at the same time. For example, when the power generation of the solar battery panel 1 is stopped in the night or the like, the opening/closing switch 36 is set to OFF, and also the opening/closing switch 37 is set to ON. On the other hand, when the solarbatterypanel 1 generates electric power, the opening/closing switch 36 is set to ON and the opening/closing switch 37 is set to OFF.

The wired LAN portion 29 of the LAN board 21 is connected to the power meters 16 and 17 through wires so that communications can be performed therebetween, and achieves measurement data from the power meters 16 and 17.

Furthermore, the wireless LAN portion 28 of the LAN board 21 is connected to the loads 12 having a wireless LAN function such as an air conditioner, a freezer, a television set, etc. and the monitor 46 for the power conditioner so that the communications can be performed therebetween. By the communication function, the loads 12 can input/output the set data, the operation status data, power consumption data, etc. thereof from/to the LAN board 21. The monitor 46 is a multi-function monitor, and has an operating portion, a display screen, a memory, a wired/wireless LAN function, etc. Data such as the amount of electric power generated by the photovoltaic power generating system, the amount of sold/purchased electric power, the self-consumed power, etc. are input from the LAN board to the monitor 46, and displayed on the display screen.

Furthermore, the LAN board 21 is communicable with connecting equipment (a broadband router or the like) 48 to the Internet in the wireless mode, and connected to a communication network 49 such as the Internet or the like through the connection equipment 48.

In the LAN board 21 having the server function of the power conditioner 6 thus constructed, the amount of electric power generated by the photovoltaic power generating system, the amount of sold/purchased electric power to/from the system 11 and the amount of self consumed power can be calculated/stored on the basis of the detection data from the power meters 16 and 17. Furthermore, instruction of reservation and actuation, etc. can be output from a cellular phone, a portable terminal, a personal computer, etc. connected to the internet 49 and the monitor 46 for the power conditioner through the LAN board 21 to the loads 12 such as an air conditioner, a video, hot water supply facilities to a bath, etc., a freezer, a television set, etc. Still furthermore, the LAN board 21 can properly gain the operation status data, the set data, etc. from the loads 12 the air conditioner, the video, the hot water supply facilities to the bath, etc., the freezer, the television set, etc.

The LAN board 21 of the power conditioner 6 is supplied with the power generated by the solar battery panel 1 in the daytime by the switching operation of the opening/closing switches 36 and 37, and supplied with power from the system 11 in the night. Accordingly, when power supply from the system 11 is cut off in the daytime, the generated power of the solar battery panel 1 is supplied to the LAN board 21 irrespective of the blackout, and thus the LAN board 21 operates at all times. Furthermore, when the power supply from the system 11 is cut off in the night, power supply to the LAN board 21 is stopped. At this time, current is supplied from the capacitor 26 to only the time counting portion 24 of the LAN board 21, and the time counting portion 24 continues to operate without being stopped. Accordingly, the function of the communication function can be restored with no interruption of the function of the time counting portion even when the blackout continues for a long term. This power supply to the time counting portion 24 discharges the capacitor 26, however, the generated power of the solar battery panel 1 is supplied to the capacitor 26 in the daytime, thereby charging the capacitor 26.

When the blackout state is continued for a long term, data such as reservation information, set data, etc. may be lost. In such a case, when the system 11 is restored from the blackout, the LAN board 21 transmits the data of the reservation information, the set data, etc. to the loads 12 such as the air conditioner, the video, the hot water supply facilities to the bath, etc., the freezer, the television set, etc. in the wireless mode, thereby restoring the data of the reservation information, the set information, etc.

The present invention is not limited to the above embodiment, and various modifications may be made without departing from the subject matter of the present invention. For example, the following modifications may be made.
(1) An auxiliary power source having a charging function is not limited to the capacitor, and a rechargeable battery or the like may be used.
(2) The generate electric power detecting unit is not limited to the generated power meter 16. The photovoltaic power generating system controls voltage and current before the power is converted to AC power in order to achieve the maximum generated power with respect to the solar battery panel 1, and thus this power value may be used as the generated electric power.

The LAN board having the server function can be installed in the power conditioner, the DC power generated by the photovoltaic power generating system is subjected to voltage adjustment, and the adjusted DC power is supplied to the LAN board. Therefore, in the daytime, the server function is actuated irrespective of blackout or non-blackout of the system (commercial power line), and the stop of the server function due to blackout of the system can be prevented as much as possible. Accordingly, the present invention is optimally applied to a power conditioner for boosting the DC power generated by the photovoltaic power generating system by a step-up chopper, converting the boosted DC power to AC power by an inverter and then connecting the AC power to a AC power supply system.

In the above embodiment, the LAN board is equipped with the wired LAN portion and the wireless LAN portion, however, at least one of the wired LAN board and the wireless LAN board may be equipped to the LAN board. In this case, the function of the wired LAN board (the function of the wireless LAN board) is also executed by the wireless LAN board (the wired LAN board).

## Claims

1. A power conditioner (6) for boosting DC power generated by a photovoltaic power generating system by a step-up chopper (7), converting the boosted DC power to AC power by an inverter(8) and connecting the AC power to an AC power supply system (11), **characterized by** including a communication unit having a communication function that constitutes a small-scale network and is equipped with at least DC power achieved by conducting voltage adjustment to DC power generated by a photovoltaic power generating system (1), the communication unit being equipped with an address managing portion (22), a memory portion (23), a time counting portion (24)and an operating portion (27) to have a server function on the network.

2. The power conditioner according to claim 1, wherein the DC power before boosted by the step-up chopper is subjected to voltage adjustment by a voltage adjusting converter (31), and used as a power source for the communicating unit.

3. The power conditioner according to claim 1, wherein the time counting portion (24) is equipped with an auxiliary power source (26) using charged power.

4. The power conditioner according to claim 3, wherein the auxiliary power source comprises a capacitor (26).

5. The power conditioner according to claim 3 or 4, wherein the capacitance of the auxiliary power source is set so that the time counting portion can operate for at least one day.

6. The power conditioner according to any one of claims 1 to 5, wherein the server function contains a storage portion for storing a generated power value achieved by detecting the electric power generated by the photovoltaic power generating system and a sold power value achieved by detecting the electric power sold to the AC power supply system.

7. The power conditioner according to any one of claims 1 to 6, wherein the server function is connectable to the Internet.

8. The power conditioner according to any one of claims 1 to 7, wherein the server function can communicate with a load (12) connected to the AC power supply system through the communication function.

9. The power conditioner according to any one of claims 1 to 8, wherein the server function and the communication function are constructed on a single board or in a single package.

10. The power conditioner according to any one of claims 1 to 9, wherein the communication unit has at least one of a wired communication function and a wireless communication function.

11. The power conditioner according to any one of claims 1 to 10, wherein the communication unit comprises a LAN board (21).
